# EUROPEAN PATENT SPECIFICATION

(11) **EP 1 286 500 B1**
(45) Date of publication and mention of the grant of the patent: **25.10.2006**
(21) Application number: 01120177.9
(22) Date of filing: 22.08.2001
(51) Int. Cl.: H04L 12/28, G06F 17/30, G06F 9/46

(54) **Method and system for operating a home network**
Verfahren und System zum Betrieb eines Heimnetzes
Méthode et système pour l'exploitation d'un réseau de domotique

(43) Date of publication of application: 26.02.2003
(73) Proprietor: Sony Deutschland GmbH, 50829 Köln (DE)
(72) Inventor: Szucs, Paul, Advanced Tech. Center Stuttgart, 70327 Stuttgart (DE); Tiedemann, Stephen, Advanced Tech.Center Stuttgart, 70327 Stuttgart (DE); Mayer, Matthias, Advanced Tech. Center Stuttgart, 70327 Stuttgart (DE); Terranova, Sabine, Advanced Tech. Center Stuttgart, 70327 Stuttgart (DE)
(74) Representative: Müller - Hoffmann & Partner

(56) References cited:
- EP-A- 0 964 558
- EP-A- 0 964 559

## Description

The invention relates to a method and a system for operating a home network, and a computer program product. More specifically, the invention relates to a method for operating a home network realizing permanent data storage and/or retrieval capabilities for home network middleware.

In recent years, a lot of research work has been done to provide home network architectures and methods for interconnecting and controlling home network devices. Primary goals to be achieved by home network architectures are that any home network device can identify, control and "present" any other home network device, and that any home network device can communicate with any other home network device.

Among current available home network middleware approaches (for example HAVi, CORBA or SOAP), there is the problem that none of them provides a lean, effective concept for storing and retrieving data handled by home network applications. All available data handling/managing concepts carry a large functional overhead, therefore being unsuitable for a home network usually providing only limited computational resources.

Document EP 0 964 559 A discloses a method for operating a HAVi system based home network having a plurality of home network devices. For each home network device having data storing and retrieving capabilities a respective data storing functional component is defined. For each of the data storing functional components of the respective home network devices a particular functional component module is defined. The functional component modules being associated with the data storing functional components are used by HAVi system components to store data elements.

It is an object of the present invention to provide a method and a system for operating a home network which are capable of providing lean data managing mechanisms for managing data to be handled by home network elements, in particular home network applications.

To solve this object, the invention provides a method for operating a HAVi system based home network according to claim 1. Further, the invention provides a system for operating a home network according to claim 10. Finally, a computer program product according to claim is provided.

According to the present invention, a method for operating a HAVi system based home network having a plurality of home network devices is provided. For each home network device having data storing and retrieving capabilities a respective data storing functional component is defined. For each of said data storing functional components of the respective home network devices a particular functional component module is defined. The functional component modules being associated with the data storing functional components are used by HAVi system components to store data elements. Functionality of the functional component modules is used to search within data stored in the data storing functional components to find data elements which comprise data matching with a searching criteria.

As can be taken from the HAVi specification, each home network device is to be understood as a physical entity attached to the home network, for example a video player, a recoder, a camera, a CD player, and the like. A functional component is to be understood as an abstraction within the HAVi architecture that represents a group of related functions associated with a device. For example, a receiver may consist of the following functional components: Tuner, decoder, and audio amplifier. A functional component module is to be understood as a HAVi software element providing an interface for controlling a specific functional component of a device. ,

An important aspect of the invention is that the HAVi architecture as a lean home network middleware is taken as a basis for data management of applications of the home network. The data management mechanisms can be integrated into the HAVi environment by defining a new functional component module associated to a functional component of a home network device providing data storing, retrieving and managing capabilities (for example hard disks, streamers, memory sticks and the like), which in the following is only referred to as data storing functional component module.

Since the HAVi architecture bases on the use of functional component modules, only little effort is necessary to introduce the data storing/management mechanisms into the existing HAVi environment. This is realized by adding a data storing functional component module to the already existing functional component modules. The data storing functional component module provides a transparent, centralized interface allowing software elements, in particular applications of the HAVi home network system to store respective application-related data or even the application itself. Any home network device offering data storage facilities (for example a harddisk or a tuner) can offer its "own" data storing functional component module as a part of the home network functionality.

Preferably, the data storing functional component modules are used to process information and/or data elements, in particular to store and/or retrieve the information and/or data elements to/from said data storing functional components.

As already mentioned, software elements, in particular software components of the HAVi system, are employed in the process of managing/storing/retrieving the information or data elements. This means that the applications handling the data elements via the data storing functional component module are preferably software applications (for example a JAVA application).

A data storing functional component module being assigned to a data storing functional component preferably allows to manage every kind of data, even application byte code. An application module is a particular type of a HAVi software element which for example highly benefits from the data storing functional component module system. Examples of the practical usage of a data storing functional component modules are the centralized handling of game high-score lists associated with a game application, documents associated with a document processing application, general preferences, and the like via a single or several data storing functional component modules.

In the following description, some concrete realization examples of the data storing functional component module according to the present invention will be given:

The functionality of the data storing functional component module may for example be used to determine raw and/or currently available storing space on the respective data storing functional components. Further, the functionality of the data storing functional component modules may be used to create/store the data elements in said data storing functional components and/or to insert data at a desired position in an already stored data element, and/or to delete at least a part of a stored data element.

In a preferred embodiment, the functionality of the data storing functional component modules comprises the concept to include/read/change/delete data element specific meta-information, which in particular is representative for the type of the content of a respective data element, into/from/in at least one data element. The concept of including meta-data attributes into the data element like data files allows an application to store additional, commonly used application-specific information in form of the meta-data attributes, and therefore gives the application full flexibility in how the organisation of its data repository is designed. Each application may organize respective data elements in a different way. For example, a word processor application could define meta-data attributes "title" and "author" for each document stored.

When searching within data stored in a data storing functional component, it may be useful to only examine the meta-information of each data element, wherein the meta-information of the data elements serves as respective possible matching information. This means that in this example at least a part of the meta-information is representative for the content of the respective data element, which enables a very performant data search.

The access to the data elements via the data storing functional component module preferably is conceived in two possible modes: Read-only mode or read-write mode. The read-only mode is concurrent and the read-write mode is exclusive. This means that any number of software elements, in particular applications, can access a data element in read-only mode, but only one application can access a data element in the read-write mode. In other words, functionality of the data storing functional component module is used to check if accessing rights for accessing/manipulating data elements respectively assigned to software elements are fulfilled if a software element wants to access a data element.

To enable an effective accessing control, each data element stored in a data storing functional component preferably is assigned to a specific software element.

The invention further provides a system for operating a home network which is adapted to perform and/or realize the method according the present invention for operating a home network as described above.

Further, the invention provides a computer program product comprising computer product means adapted to perform and/or realize the method according to the present invention for operating a home network as described above, when it is executed on a computer, a digital signal processing means.

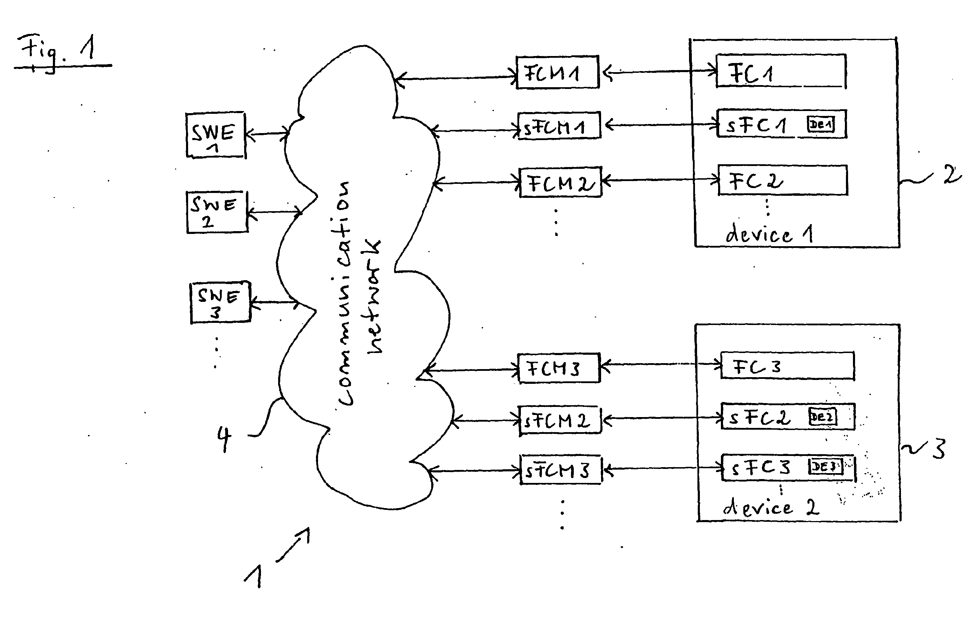

In the following, the present invention is illustrated by an exemplary embodiment thereof with reference to the accompanying drawing, wherein
- **Fig. 1**: is a schematic drawing showing a preferred embodiment of a part of a HAVi network architecture comprising functionality for handling data storing home network capabilities.

A part of a HAVi based home network 1 comprises a first home network device 2 and a second home network device 3, which are connected with each other by a communication network 4. The communication network 4 is for example based upon an IEEE 1394 communication bus. The first home network device 2 comprises a first functional component FC1, a second functional component FC2, and a first data storing functional component sFC1. For example, if the first home network device 2 is an audio device, the first functional component FC1 may for example be a tuner unit, and the second functional component FC2 may for example be an amplifying unit. The first data storing functional component sFC1 may for example be a hard disk for storing digital audio data received by the tuner unit. The data to be stored on the first functional component sFC1 is stored in form of data elements; here, the first data storing functional component sFC1 comprises a first data element DE1, for example a data file.

In the same manner, the second home network device 3 comprises a third functional component FC3, a second data storing functional component sFC2 and a third data storing functional component sFC3, each of them comprising a data element (DE2 and DE3), respectively. The second home network device 3 may for example be a computer comprising a computational unit as third functional component FC3, and further two hard disks as first and a second data storing functional components sFC2, sFC3. In the following, the sum of sFC1 to sFC3 will be simply referred to as sFCᵢ.

To use the storage provided by the first to third data storing functional components sFC1 to sFC3, to each of the data storing functional components sFC1 to sFC3 one of the data storing functional component modules sFCM1 to sFCM3 is assigned, respectively. Software elements, here a first to third software element SWE 1 to SWE3 can use the data storing functional component modules sFCM1 to sFCM3 as respective interfaces for accessing corresponding data storing functional components sFC1 to sFC3. In this manner, storing, retrieving or managing data handled by the software elements SWE1 to SWE3 is performed. In the following, the sum of sFCM1 to sFCM3 will be simply referred to as sFCMᵢ. The sum of SWE1 to SWE3 will be simply referred to as SWEᵢ, and the sum of DE1 to DE3 will be simply referred to as DEᵢ.

As has become apparent from the foregoing description, the inventive concept of using the functional component module system of a HAVi environment allows a lean, centralized and transparent handling of home network data.

In the following description a preferred embodiment of an API (Application Program Interface) definition is given as a preferred embodiment of a data storing functional component module being used in a HAVi based home network.

### 1.1.1 Storage Services

| Service | Comm Type | Locality | Access | Resv Prot |
|---|---|---|---|---|
| Storage::GetCapacity | M | global | all | |
| Storage::GetAvailableSpace | M | global | all | |
| Storage: :AppendData | M | global | all | |
| Storage::Close | M | global | all | |
| Storage:: Create | M | global | all | |
| Storage::Delete | M | global | all | |
| Storage::DeleteData | M | global | all | |
| Storage::Find | M | global | all | |
| Storage::GetFileSize | M | global | all | |
| Storage:: GetMetaData | M | global | all | |
| Storage::InsertData | M | global | all | |
| Storage::Open | M | global | all | |
| Storage::Read Data | M | global | all | |
| Storage::SetMetaData | M | global | all | |

### 1.1.2 Storage Data Structures

### ApplicationIdString

### Definition

typedef wstring ApplicationIdString;

### Description

This defines the name that is used by applications for identification. It is composed of the company s DNS name and any name to identify the application within the company s namespace. It has the following format:
<Company DNS name>/<application name>
Example: my_company.com/my_application_name

### Fileld

### Definition

typedef octet FileId [10];

### Description

This identifies a file. All file access is performed on a FileId.

### MetaData

### Definition

typedef sequence<MetaDataAttribute> MetaData;

### Description

The MetaData element contains additional application-specific information relating to a file. MetaData contains a sequence of MetaDataAttributes. It is left completely open for the application how it uses the MetaData, or if it uses MetaData at all.

### MetaDataAttribute

### Definition

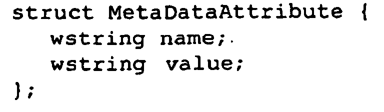

### Description

This contains the name and the value of a MetaDataAttribute.
MetaDataAttributes could be the file s name, date, version etc.

### FileAccessType

### Definition

enum FileAccessType{ READ_ONLY, READ_WRITE };

### Description

This describes the access types of a file. Any number of applications can access a file in READ_ONLY mode. Only one application can have access to a file in READ_WRITE mode at any particular time.

### 1.1.3 Storage API

### Storage: :GetCapacity

### Prototype

Status Storage::GetCapacity (
out uint64 capacity)

### Parameters

■ capacity - total raw capacity of the Storage FCM, in octets.

### Description

Storage::GetCapacity returns the raw capacity of the storage entity associated with the Storage FCM.

### Error codes

No specific error codes are defined.

### Storage: :GetAvailableSpace

### Prototype

Status Storage::GetAvailableSpace (
out uint64 availableSpace)

### Parameters

■ availableSpace - current capacity still available in the Storage FCM, in octets.

### Description

Storage: :GetAvailableSpace returns the currently remaining capacity of storage provided by the Storage FCM.

### Error codes

No specific error codes are defined.

### Storage: :AppendData

### Prototype

Status Storage::AppendData
in FileId fileId,
in sequence<octet> data)

### Parameters

■ fileId - Identifies the file.
■ data - data to append.

### Description

Storage: :AppendData appends the octet sequence data to the end of the current file data contents of the file identified by fileId.

### Error codes

■ ENDT_EXIST - File associated with fileId does not exist.
■ EACCESS_TYPE - The file had not been opened with FileAccessType of READ_WRITE.
■ ENOT_OPEN - The file has not been opened by the calling application.
■ ENO_CAPACITY Not enough storage resources are available to perform this operation.

### Storage::Close

### Prototype

Status Storage::Close (in FileId fileId)

### Parameters

■ fileId - identifies the file.

### Description

Storage::Close closes the file associated with fileId. After closing the file any further accesses by this application to the file contents will result in an ENOT_OPEN error. If an application is closed, all files it had previously opened are closed automatically.

### Error codes

■ ENOT_EXIST - File associated with fileId does not exist.
■ ENOT_OPEN - The file has not been opened by the calling application.

### Storage: :Create

### Prototype

Status Storage::Create (
in ApplicationIdString applicationIdString,
out FileId fileId)

### Parameters

■ applicationIdString - identifies the application that is associated with the file.
■ fileId - identifies the newly created file.

### Description

Storage::Create creates a new file that will be assigned to the application that is identified by applicationIdString. The Storage FCM returns fileId, to be used for subsequent accesses to the file. After being created, the file is in the closed state.
■ ENO_CAPACITY - Not enough storage resources are available to perform this operation.

### Storage: :Delete

### Prototype

Status Storage::Delete (in FileId fileId)

### Parameters

■ fileId - identifies the file.

### Description

Storage::Delete deletes the file associated with fileId. After deleting the file any further accesses to that fileId will result in an ENOT_EXIST error.

### Error codes

■ ENOT_EXIST - File associated with fileId does not exist.
■ EACCESS_VIOLATION - There is an access violation. Another application currently has the file open (READ_ONLY or READ_WRITE).

### Storage::DeleteData

### Prototype

Status Storage::DeleteData (
in FileId fileId,
in uint64 offset,
in uint64 dataToDelete)

### Parameters

■ fileId - identifies the file.
■ offset - offset at which to start to delete data.
■ dataToDelete - the number of octets to delete.

### Description

Storage: : DeleteData deletes maximum dataToDelete octets of file contents data of the file identified by fileId beginning at position offset including the octet at position offset. The first valid file position is zero. The file must have been opened with FileAccessType equal to READ_WRITE.

### Error codes

■ ENOT_EXIST - File associated with fileId does not exist.
■ EACCESS_TYPE - The file was not opened with FileAccessType of READ_WRITE.
■ ENOT_OPEN - The file has not been opened by the calling application.
■ EEND_OF_FILE - The offset position of f set is past the end of the file (greater than the size of the file minus one).

### Storage::Find

### Prototype

Status Storage::Find (
in ApplicationIdString applicationIdString,
in MetaData metaData,
out sequence<FileId> fileIdList)

### Parameters

■ applicationIdString - identifies the application that is associated with the files.
■ metaData - defines the meta-data that must be set and its values that must match for the files of the result set.
■ fileIdList - a list of FileId thatmatchthesearchcriteria.

### Description

Storage::Find builds a list of FileIds of files that are associated with the application identified by applicationIdString and that fulfill the search criteria defined in metaData - the meta-data attributes that are contained in metaData must be matched in the meta-data of the found file(s), both in attribute name and its value. If there aren't any files that fulfill the search criteria then fileIdList will be empty.

### Storage::GetFileSize

### Prototype

Status Storage::GetFileSize (
in FileId fileId,
out uint64 size)

### Parameters

■ fileId - identifies the file.
■ size - the size in octets of the file.

### Description

Storage: : GetFileSize returns the size of the file data contents in octets.

### Error codes

■ ENOT_EXIST - File associated with fileId does not exist.

### Storage::GetMetaData

### Prototype

Status Storage::GetMetaData (
in FileId fileId,
out MetaData metaData)

### Parameters

■ fileId - identifies the file.
■ metaData -the meta-data of the file.

### Description

Storage::GetMetaData returns the met a Data block of the file associated with fileId.

### Error codes

■ ENOT_EXIST - File associated with fileId does not exist.

### Storage::InsertData

### Prototype

Status Storage::InsertData (
in FileId fileId,
in uint64 offset,
in sequence<octet> data)

### Parameters

■ fileId - Identifies the file.
■ offset- offset at which to insert the data.
■ data - data to insert.

### Description

Storage: :WriteData inserts data into the file identified by fileId at the position beginning with offset. The data are inserted and existing data is shifted. After the operation the first octet of data will be at position offset. The first valid file position is zero. If offset is greater than the file s size minus one there will be an EEND_OF_FILE error.

### Error codes

■ ENOT_EXIST - File associated with fileId does not exist.
■ EACCESS_TYPE - The FileAccessType specified to open the file has not been READ_WRITE.
■ ENOT_OPEN - The file has not been opened by this application.
■ ENO_CAPACITY - Not enough storage resources are available to perform this operation.
■ EEND_OF_FILE - The offset position offset is past the end of the file (greater than the size of the file minus one).

### Storage::Open

### Prototype

Status Storage::Open (
in FileId fileId,
in FileAccessType fileAccess)

### Parameters

■ fileId - identifies the file.
■ fileAccess -defines the FileAccessType.

### Description

Storage: :Open opens the file identified by fileId for read-only or read-write access. After opening the file with fileAccess equal to READ_ONLY or READ_WRITE its data can be read concurrently. To exclusivly manipulate the file contents data, fileAccess equal to READ_WRITE must be specified.

### Error codes

■ ENOT_EXIST - File associated with fileId does not exist.
■ EACCESS_VIOLATION - There is an access violation if fileAccess is specified as READ_WRITE and the file identified by fileId has been opend by another application in READ_WRITE mode.

### Storage::ReadData

### Prototype

Status Storage::ReadData (
in FileId fileId,
in uint64 offset,
in uint64 dataToRead,
out sequence<octet> data)

### Parameters

■ fileId- identifies the file.
■ offset - offset at which to start reading.
■ dataToRead - maximum number of octets to read
■ data - destination that will contain the data read.

### Description

Storage:: ReadData reads maximum dataToRead octets of file contents data starting from the position offset whereby position offset is the first octet that is read. The first valid file position is zero.

### Error codes

■ ENOT_EXIST - File associated with fileId does not exist.
■ EEND_OF_FILE - The offset position offset is past the end of the file.
■ ENOT_OPEN - The file has not been opened by the calling application.

### Storage::SetMetaData

### Prototype

Status Storage::SetMetaData (
in FileId fileId,
in MetaData metaData)

### Parameters

■ fileId - identifies the file.
■ metaData -the file s metaData block.

### Description

Storage::SetMetaData replaces the previous metaData block of the file identified by fileId with the given metaData.

### Error codes

■ ENOT_EXIST - File associated with fileId does not exist.
■ ENO_CAPACITY - Not enough storage resources are available to perform this operation.

## Claims

1. Method for operating a HAVi system based home network (1) having a plurality of home network devices (2, 3),
- wherein for each home network device (2, 3) having data storing and retrieving capabilities a respective data storing functional component (sFCᵢ) is defined, and
- wherein for each of said data storing functional components (sFCᵢ) of said respective home network devices (2, 3) a particular functional component module (sFCMᵢ) is defined,
- wherein said functional component modules (sFCMᵢ) being associated with said data storing functional components (sFCᵢ) are used by HAVi system components to store data elements (DEᵢ),
**characterized in that**
functionality of said functional component modules (sFCMᵢ) is used to search within data stored in said data storing functional components (sFCᵢ) to find data elements (DEᵢ) which comprise data matching with a searching criteria.

2. Method according to claim 1.
**characterized in that**
said HAVi system components are software elements (SWEᵢ).

3. Method according to claim 2,
**characterized in that**
using functionality of said functional component modules (sFCMᵢ) to determine raw and/or currently available storing space on said respective data storing functional components (sFCᵢ).

4. Method according to any one of the claims 1 to 3,
**characterized by**
using functionality of the functional component modules (sFCMᵢ) to create and/or store said data elements (DEᵢ) in said data storing functional components (sFCᵢ), and/or to insert data at a desired position in already stored data elements (DEᵢ), and/or to delete at least a part of a stored data element (DEᵢ).

5. Method according to any one of the claims 1 to 4,
**characterized by**
using functionality of the functional component module (sFCMᵢ) to include or read data element specific meta information, in particular representative for the type of the content of a respective data element (DEᵢ), into/from at least one data element (DEᵢ).

6. Method according to claim 5,
**characterized by**
examining only said meta information of each data element (DEᵢ) when searching within data stored in said data storing functional component (sFCᵢ), wherein the meta information of said data elements (DEᵢ) serves as respective possible matching information.

7. Method according to any one of the claims 2 to 6,
**characterized by**
using functionality of said functional component modules (sFCMᵢ) to check if accessing rights for accessing or manipulating data elements (DEᵢ) respectively assigned to software elements (SWEᵢ) are fulfilled if a software element wants to access a data element (DEᵢ).

8. Method according to any one of the claims 1 to 7,
**characterized in that**
each data element (DEᵢ) stored in the data storing functional component (sFCᵢ) is assigned to a software element (SWEᵢ).

9. Method according to any one of the claims 2 to 8,
**characterized in that**
software applications are used as software elements (SWEᵢ), and/or data files are used as data elements (DEᵢ).

10. System (1) for operating a home network, said system being adapted to perform and/or realize the method for operating a home network according to any one of the preceding claims 1 to 9.

11. Computer program product, comprising computer product means adapted to perform and/or realize the method for operating a home network according to any one of the preceding claims 1 to 9, when it is executed on a computer or a digital signal processing means.

## Patentansprüche

1. Verfahren zum Betreiben eines Heimnetzes (1) auf der Basis eines HAVi-Systems, das mehrere Heimnetzvorrichtungen (2, 3) besitzt,
- wobei für jede Heimnetzvorrichtung (2, 3), die Datenspeicherungs- und Datenwiedergewinnungsfähigkeiten besitzt, eine entsprechende Datenspeicherungs-Funktionskomponente (sFCᵢ) definiert ist, und
- wobei für jede der Datenspeicherungs-Funktionskomponenten (sFCᵢ) der jeweiligen Heimnetzvorrichtungen (2, 3) ein bestimmtes Funktionskomponentenmodul (sFCNᵢ) definiert ist,
- wobei die Funktionskomponentenmodule (sFCNᵢ), die den Datenspeicherungsfunktionskomponenten (sFCᵢ) zugeordnet sind, von HAVi-Systemkomponenten verwendet werden, um Datenelemente (DEᵢ) zu speichern,
**dadurch gekennzeichnet, dass**
die Funktionalität der Funktionskomponentenmodule (sFCNᵢ) verwendet wird, um in den Datenspeicherungs-Funktionskomponenten (sFCᵢ) gespeicherte Daten zu durchsuchen, um Datenelemente (DEᵢ) zu finden, die Daten enthalten, die mit einem Suchkriterium übereinstimmen.

2. Verfahren nach Anspruch 1,
**dadurch gekennzeichnet, dass**
die HAVᵢ-Systemkomponenten Software-Elemente (SWEᵢ) sind.

3. Verfahren nach Anspruch 2,
**dadurch gekennzeichnet, dass**
die Funktionalität der Funktionskomponentenmodule (sFCNᵢ) verwendet wird, um rohen und/oder momentan verfügbaren Speicherraum in den jeweiligen Datenspeicherungs-Funktionskomponenten (sFCᵢ) zu bestimmen.

4. Verfahren nach einem der Ansprüche 1 bis 3,
**gekennzeichnet durch**
die Verwendung der Funktionalität der Funktionskomponentenmodule (sFCNᵢ), um Datenelemente (DEᵢ) zu erzeugen und in den Datenspeicherungs-Funktionskomponenten (sFCᵢ) zu speichern und/oder um Daten an einer gewünschten Position in bereits gespeicherten Datenelementen (DEᵢ) einzufügen und/oder um wenigstens einen Teil eines gespeicherten Datenelements (DEᵢ) zu löschen.

5. Verfahren nach einem der Ansprüche 1 bis 4,
**gekennzeichnet durch**
das Verwenden der Funktionalität der Funktionskomponentenmodule (sFCNᵢ), um für ein Datenelement spezifische Meta-Informationen, die insbesondere den Typ des Inhalts eines entsprechenden Datenelements (DEᵢ) repräsentieren, in ein Datenelement (DEᵢ) aufzunehmen bzw. aus diesem wenigstens einen Datenelement (DEi) auszulesen.

6. Verfahren nach Anspruch 5,
**gekennzeichnet durch**
Untersuchen nur der Meta-Informationen jedes Datenelements (DEᵢ), wenn die in den Datenspeicherungs-Funktionskomponenten (sFCᵢ) gespeicherten Daten durchsucht werden, wobei die Meta-Informationen der Datenelemente (DEᵢ) als jeweilige mögliche Übereinstimmungsinformationen dienen.

7. Verfahren nach einem der Ansprüche 2 bis 6,
**gekennzeichnet durch**
Verwenden der Funktionalität der Funktionskomponentenmodule (sFCNᵢ), um zu prüfen, ob Zugriffsrechte für den Zugriff oder die Manipulation von Datenelementen (DEᵢ), die jeweils Software-Elementen (SWEᵢ) zugewiesen sind, erfüllt sind, falls ein Software-Element auf ein Datenelement (DEᵢ) zugreifen möchte.

8. Verfahren nach einem der Ansprüche 1 bis 7,
**dadurch gekennzeichnet, dass**
jedes Datenelement (DEᵢ), das in der Datenspeicherungs-Funktionskomponente (sFCᵢ) gespeichert ist, einem Software-Element (SWEᵢ) zugewiesen ist.

9. Verfahren nach einem der Ansprüche 2 bis 8,
**dadurch gekennzeichnet, dass**
Software-Anwendungen als Software-Elemente (SWEᵢ) verwendet werden und/oder Datendateien als Datenelemente (DEᵢ) verwendet werden.

10. System (1) zum Betreiben eines Heimnetzes, wobei das System so beschaffen ist, dass es das Verfahren zum Betreiben eines Heimnetzes nach einem der vorhergehenden Ansprüche 1 bis 9 ausführen und/oder verwirklichen kann.

11. Computerprogrammprodukt, das Computerproduktmittel enthält, die so beschaffen sind, dass sie das Verfahren zum Betreiben eines Heimnetzes nach einem der vorhergehenden Ansprüche 1 bis 9 ausführen und/oder verwirklichen, wenn es auf einem Computer oder einem digitalen Signalverarbeitungsmittel ausgeführt wird.

## Revendications

1. Procédé pour mettre en oeuvre un système HAVi basé sur un réseau domotique (1) comportant une pluralité de dispositifs de réseau domotique (2, 3),
- dans lequel, pour chaque dispositif de réseau domotique (2, 3) ayant des capacités de mémorisation et de récupération de données, un composant fonctionnel de mémorisation de données (sFC₁) respectif est défini, et
- dans lequel, pour chacun desdits composants fonctionnels de mémorisation de données (sFC₁) desdits dispositifs de réseau domotique (2, 3) respectifs, un module de composant fonctionnel (sFCM₁) particulier est défini,
- dans lequel lesdits modules de composant fonctionnel (sFCM₁) associés auxdits composants fonctionnels de mémorisation de données (sFC₁) sont utilisés par des composants du système HAVi pour mémoriser des éléments de données (DE₁),
**caractérisé en ce que**
la fonctionnalité desdits modules de composant fonctionnel (sFCM₁) est utilisée pour effectuer une recherche dans des données mémorisées dans lesdits composants fonctionnels de mémorisation de données (sFC₁) pour trouver des éléments de données (DE₁) qui comprennent des données correspondant à des critères de recherche.

2. Procédé selon la revendication 1,
**caractérisé en ce que**
lesdits composants du système HAVi sont des éléments logiciels (SWE₁).

3. Procédé selon la revendication 2,
**caractérisé par**
l'utilisation de la fonctionnalité desdits modules de composant fonctionnel (sFCM₁) pour déterminer un espace de mémorisation vide et/ou actuellement disponible sur lesdits composants fonctionnels de mémorisation de données (sFC₁) respectifs.

4. Procédé selon l'une quelconque des revendications 1 à 3,
**caractérisé par**
l'utilisation de la fonctionnalité des modules de composant fonctionnel (sFCM₁) pour créer et/ou mémoriser lesdits éléments de données (DE₁) dans lesdits composants fonctionnels de mémorisation de données (sFC₁), et/ou pour insérer des données à une position souhaitée dans des éléments de données (DE₁) déjà mémorisés, et/ou pour effacer au moins une partie d'un élément de données (DE₁) mémorisé.

5. Procédé selon l'une quelconque des revendications 1 à 4,
**caractérisé par**
l'utilisation de la fonctionnalité du module de composant fonctionnel (sFCM₁) pour inclure ou lire des méta-informations spécifiques à un élément de données, en particulier représentatives du type du contenu d'un élément de données (DE₁) respectif, dans au moins un élément de données (DE₁).

6. Procédé selon la revendication 5,
**caractérisé par**
l'examen uniquement desdites méta-informations de chaque élément de données (DE₁) lors d'une recherche dans des données mémorisées dans ledit composant fonctionnel de mémorisation de données (sFC₁), dans lequel les méta-informations desdits éléments de données (DE₁) servent en tant qu'informations correspondantes possibles respectives.

7. Procédé selon l'une quelconque des revendications 2 à 6,
**caractérisé par**
l'utilisation de la fonctionnalité desdits modules de composant fonctionnel (sFCM₁) pour vérifier si des droits d'accès pour accéder à ou manipuler des éléments de données (DE₁) respectivement attribués à des éléments logiciels (SWE₁) sont satisfaits si un élément logiciel souhaite accéder à un élément de données (DE₁).

8. Procédé selon l'une quelconque des revendications 1 à 7,
**caractérisé en ce que**
chaque élément de données (DE₁) mémorisé dans le composant fonctionnel de mémorisation de données (sFC₁) est attribué à un élément logiciel (SWE₁).

9. Procédé selon l'une quelconque des revendications 2 à 8,
**caractérisé en ce que**
des applications logicielles sont utilisées en tant qu'éléments logiciels (SWE₁), et/ou des fichiers de données sont utilisés en tant qu'éléments de données (DE₁).

10. Système (1) pour mettre en oeuvre un réseau domotique, ledit système étant adapté pour effectuer et/ou réaliser le procédé pour mettre en oeuvre un réseau domotique selon l'une quelconque des revendications précédentes 1 à 9.

11. Produit-programme informatique, comprenant des moyens formant produit informatique adaptés pour effectuer et/ou réaliser le procédé pour mettre en oeuvre un réseau domotique selon l'une quelconque des revendications précédentes 1 à 9, lorsqu'il est exécuté sur un ordinateur ou des moyens de traitement de signal numérique.
